(19) **Europäisches Patentamt / European Patent Office / Office européen des brevets**

(11) **EP 2 161 179 B1**

(12) **EUROPEAN PATENT SPECIFICATION**

(45) Date of publication and mention
of the grant of the patent:
**01.08.2012  Bulletin 2012/31**

(51) Int Cl.:
*B62D 5/04* (2006.01)          *B62D 6/00* (2006.01)
*B62D 101/00* (2006.01)      *B62D 119/00* (2006.01)

(21) Application number: **08740736.7**

(22) Date of filing: **21.04.2008**

(86) International application number:
**PCT/JP2008/057694**

(87) International publication number:
**WO 2008/142936 (27.11.2008 Gazette 2008/48)**

(54) **ELECTRIC POWER STEERING DEVICE**

ELEKTRISCHE SERVOLENKVORRICHTUNG

DISPOSITIF DE DIRECTION ASSISTEE ELECTRIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **23.05.2007  JP 2007136675**

(43) Date of publication of application:
**10.03.2010  Bulletin 2010/10**

(73) Proprietor: **NSK Ltd.**
**Tokyo 141-8560 (JP)**

(72) Inventors:
• **KUMAGAI, Shin**
**Fujisawa-shi**
**Kanagawa 251-8501 (JP)**

• **KAWADA, Hideaki**
**Maebashi-shi**
**Gunma 371-8527 (JP)**

(74) Representative: **Klingseisen, Franz**
**Klingseisen & Partner**
**Postfach 10 15 61**
**80089 München (DE)**

(56) References cited:
**JP-A- 2003 182 598     JP-A- 2005 029 001
JP-A- 2005 254 888     JP-A- 2007 015 683**

**Description**

Technical Field

The present invention relates to an electric power steering apparatus comprising a steering assisting mechanism that is provided with an electric motor to give steering assisting power to a steering system, a steering assisting control means that controls driving the steering assisting mechanism, and a self-checking means that performs initial checking including checking of a power interruption means at the start of the operation of the steering assisting control means and that makes the steering assisting control means to be energized state to operate the power interruption means, when there is no trouble in operation of the steering assisting control means in a result of the initial checking.

Background Art

As this kind of electric power steering apparatus heretofore, for example, an electric power steering apparatus is known that a control unit turns off a power supply relay and a motor relay respectively after the elapse of a delay time set beforehand since an ignition switch is turned off, and when the ignition switch is turned on again before the elapse of the delay time, the control unit makes an assist start condition (number of rotations of engine NE> 470rpm) set beforehand to be an input waiting state without performing initial checking, thereby preventing an assist start delay after the ignition switch is turned on again as the assist start is possible immediately when the ignition switch is turned on again before the elapse of the delay time (refer to patent document 1).

[patent document 1] JP 2003-182598A

However, in the conventional embodiment as described in above patent document 1, when the ignition switch is turned to on state again before the elapse of the predetermined delay time since the ignition switch is turned to off state, an assist start condition is set to be input waiting state without initial checking. Therefore there is an unsolved problem that an abnormality occurring after the initial checking in previous on state of the ignition switch cannot be detected.

In order to solve this problem, it is necessary to perform the initial checking for every time the ignition switch is turned to on state. However, in a case of checking of a power interruption means such as a relay in this initial checking is performed, it is necessary to return the power interruption means to on state after once turning it off state to ensure a conduction state. However, there is a problem that time is needed for this checking, and an abnormal sound occurs when turning the power interruption means to on state, so that an aggravation of merchantability is caused.

Thus, the present invention has been made in view of the unsolved problems of the prior art examples and has an object to provide an electric power steering apparatus that can prevent a sonic boom from causing while shortening the initial checking time when the ignition switch is turned to on state again before the elapse of the predetermined delay time since the ignition switch is turned to off state.

Disclosure of the invention

An electric power steering apparatus according to the present invention comprises: a steering assisting mechanism that is provided with an electric motor to give a steering assisting force to a steering system; a steering assisting control means that controls driving the electric motor of the steering assisting mechanism; and a self-checking means that performs an initial checking including a checking of a power interruption means of the steering assisting control means at least when an ignition switch is turned to on state, and that causes the steering assisting control means to operate when there is no trouble in operation of the steering assisting control means in a result of the initial checking, wherein the self-checking means is configured to determine checking items to be executed in the next initial checking on the basis of a checking result in a period until the ignition switch is turned to off state since the steering assisting control means operates.

According to this configuration, the self-checking performs initial checking for every operation start of steering assisting control means, however, checking items in performing initial checking are determined on the basis of a result of checking in a period until the ignition switch is turned to off state since the steering assisting control means operates at previous time. Therefore, it is possible to shorten initial checking time by performing only necessary initial checking. In addition, the self-checking means is configured to execute the initial checking when the ignition switch is turned to on state, and perform the initial checking for checking items except the checking items accompanying with conduction/ interruption operations of the power interruption means when the ignition switch is turned to on state again before the elapse of the predetermined delay time to maintain the steering assisting control means in operation state since the ignition switch is turned to off state.

According to this configuration, the self-checking means performs the initial checking for checking items except the checking items accompanying with conduction/interruption operations of the power interruption means such as a relay when the ignition switch is turned to on state again before the elapse of the predetermined delay time to maintain the steering assisting control means in operation state since the ignition switch is turned to off state. Therefore, it is possible to prevent surely a sonic boom at the time of conduction operation and interruption operation of power interruption means from occurring.

In addition, the power interruption means is controlled in operation by a control means comprising a power supply system from a power supply source except a power supply system from the ignition switch. According to this configuration, the power interruption means is controlled in operation by a control means comprising a power supply system from a power supply source except a power supply system from the ignition switch. Therefore, even if the ignition switch is turned to off state, it is possible to continue an operation control of power interruption means can be continued by the control means.

Furthermore, the electric power steering apparatus further comprises a control unit including the steering assisting control means, wherein the control unit comprises an arithmetical processing unit that operates a current command value on the basis of a steering torque input from the steering torque detection means; a motor control unit that drives the electric motor on the basis of the current command value operated in the arithmetical processing unit; the power interruption means that is interposed between the motor control unit and a power supply source ; and a motor relay that is interposed between the motor control means and the electric motor, and a power circuit that is connected between the power interruption means and motor control unit while being connected to the power supply source via the ignition switch for supplying the operation power to the arithmetical processing unit.

According to this configuration, the power circuit includes two of power supply systems with a power supply system via an ignition switch and a power supply system via power interruption means. Therefore, it is possible to operate the arithmetical processing unit because the power supply circuit operates until the power supply interruption means is turned power interruption state so that initial checking processing corresponding to the initial checking means is executed by this arithmetical processing unit, thereby allowing to take operational advantages similar with claim 3.

Brief Explanation of the Drawings

FIG.1 is a schematic block diagram showing one embodiment according to the present invention;
FIG. 2 is a characteristic diagram illustrative of torque detection signals detected by a steering torque sensor;
FIG.3 is a block diagram illustrative of a concrete configuration of a controller of FIG. 1;
FIG.4 is a flow chart illustrative of an example of a steering assisting control processing procedure to be executed in a main MCU and a sub MCU;
FIG.5 is a characteristic diagram illustrative of a steering assisting command value calculation map; and
FIG.6 is a flow chart illustrative of an example of a self-checking processing procedure to be executed in the main MCU.

Best Mode for Carrying Out the Invention

Embodiments of the present invention will now be described with reference to the accompanying drawings.

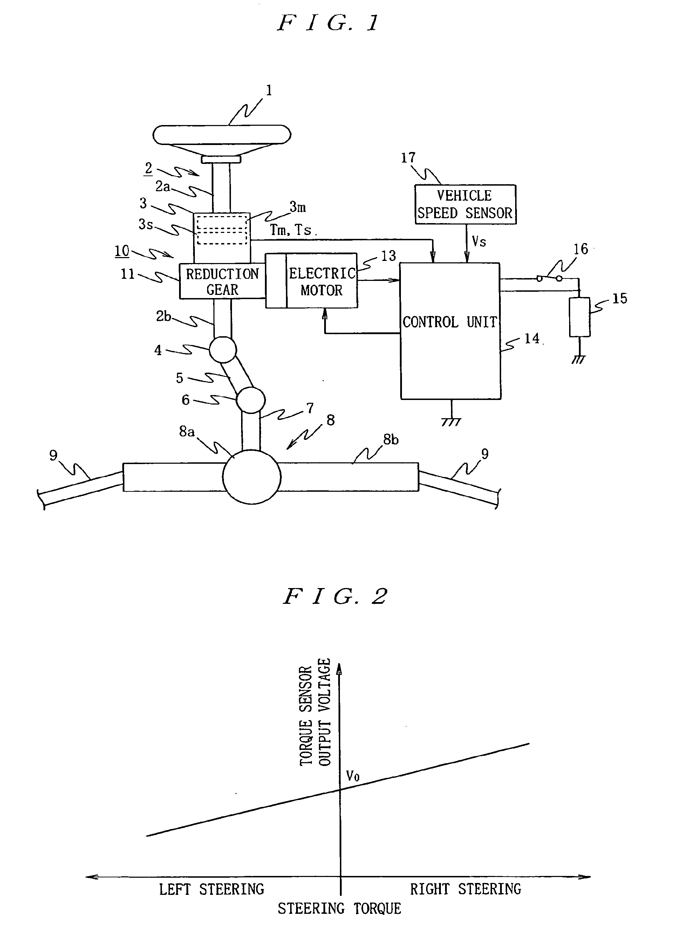

FIG. 1 is a schematic block diagram showing one embodiment according to the present invention. In FIG.1, 1 denotes a steering wheel, and a steering force acted by a driver to this steering wheel 1 is transmitted to a steering shaft 2 having an input shaft 2a and an output shaft 2b. In this steering shaft 2, one end of the input shaft 2a is coupled to the steering wheel 1, and another end thereof, is coupled via the steering torque sensor 3 as a steering torque detection means, to one end of the output shaft 2b. Here, the steering torque sensor 3 consists of a main torque sensor 3m and a sub torque sensor 3s.

The steering force transmitted to the output shaft 2b is transmitted via an universal joint 4 to a lower shaft 5, and is additionally transmitted via an universal joint 6 to a pinion shaft 7. The steering force transmitted to this pinion shaft 7 is transmitted via a steering gear mechanism 8 to a tie rod 9, and makes a turning-steered wheel, which is not illustrated, to be turning-steered. Here, the steering gear mechanism 8 is constituted in a rack-and-pinion form to have a pinion 8a coupled to the pinion shaft 7 and a rack 8b engaging with this pinion 8a, and convert a rotation movement transmitted to the pinion 8a to a linear movement at the rack 8b.

A steering assisting mechanism 10 for transmitting a steering assisting force to the output shaft 2b is coupled to the output shaft 2b of the steering shaft 2. This steering assisting mechanism 10 includes a reduction gear 11 coupled to the output shaft 2b and an electric motor 13, as a electric motor generating the steering assisting force, coupled to the reduction gear 11.

The main torque sensor 3m and the sub torque sensor 3s constituting the steering torque sensor 3 are provided on the steering wheel 1 to detect a steering torque transmitted to the input shaft 2a and are, for example, configured to convert the steering torque to a distortion angular displacement of the torsion bar, which is not illustrated, interposed between the input shat 2a and the output shaft 2b, and convert this distortion angular displacement to a resistance change or a magnetic change so as to detect the steering torque.

These main torque sensor 3m and sub torque sensor 3s, as shown in FIG. 2, are configured to output the torque detection values Tm and Ts which become a predetermined neutral voltage $V_0$ when the input steering torque is zero, which become a more increased voltage than the neutral voltage $V_0$ in accordance with the increment of the steering torque when steering to right from the situation that steering torque is zero, and which become a more decreased voltage than the neutral voltage $V_0$ in accordance with the increment of the steering torque when steering to left from the situation that the torque is zero.

The torque detection values Tm and Ts output by these main torque sensor 3m and sub torque sensor 3s are input to a control unit 14. In this control unit 14, a power is supplied via an ignition switch 16 from a battery 15 as a power supply source, and a power is supplied directly from the battery 15, vehicle speed detection value Vs detected by a vehicle speed sensor 17 and drive current detection value Im flowing into the electric motor 13 are also input to, other than the torque detection values Tm and Ts. Thus, a steering assisting command value Iref is calculated that occurs the steering assisting force corresponding to the input torque detection value Tm and the vehicle detection value Vs in the electric motor 13, and a drive current supplied to the electric motor 13 is feedback-controlled on the basis of the calculated steering assisting command value Iref and motor current detection value Im.

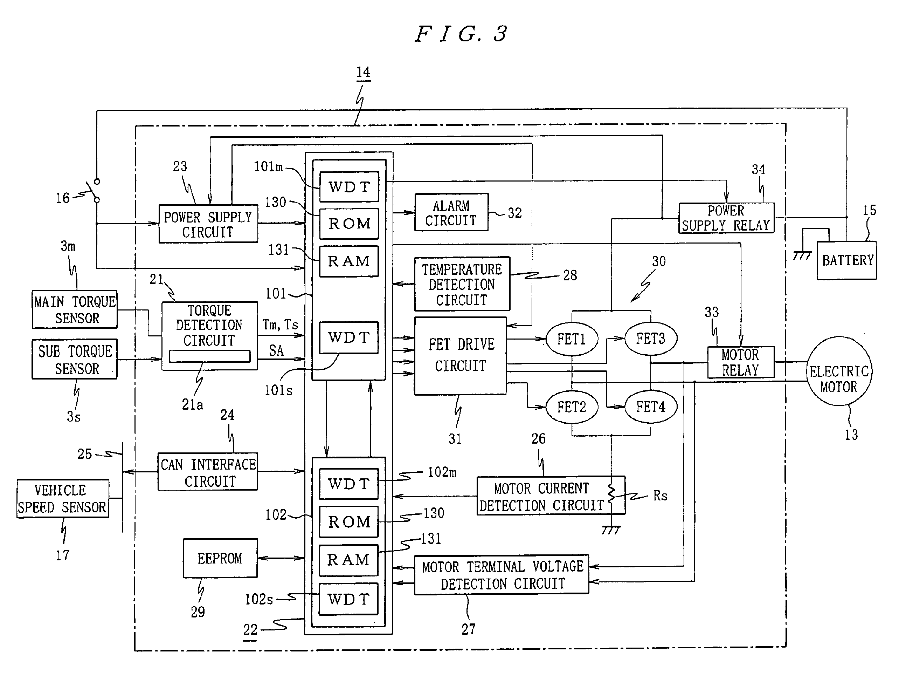

The control unit 14, as shown in FIG.3, includes a torque detection circuit 21 in which the torque detection signals of main torque sensor 3m and sub torque sensor 3s constituting the steering torque sensor 3 are input so that plus and minus torque detection values Tm and Ts are calculated by subtracting the neutral voltage $V_0$ from these input torque detection signals. This torque detection circuit 21 includes therein a sensor voltage monitoring section 21a which monitors whether or not the sensor voltage supplied to both torque sensors 3m and 3s is normal, and outputs a voltage abnormality detection signal SA of, for example, logic value "1" when the sensor voltage is abnormal.

In addition, the control unit 14 includes an arithmetical processing unit 22 constituted in, for example, a CPU which performs a predetermined operation on the basis of the torque detection values Tm and Ts output from the torque detection circuit 21, the voltage abnormality detection signal SA and vehicle detection value Vs to output motor control signal Imr. This arithmetical processing unit 22 is supplied with a control electric power generated by a power supply circuit 23 which has two types of power supply systems: a power supply system in which a power from the battery 15 is supplied via the ignition switch 16; and a power supply system in which a power is supplied from an output side of the power supply relay described below.

In addition, the arithmetical processing unit 22 is coupled to the bus 25 as a transmission path constituting a controller area network (CAN: Controller Area Network) via a communication interface circuit 24 and obtains vehicle detection value Vs from the vehicle speed sensor 17 which is coupled to the bus 25.

In addition, the arithmetical processing unit 22 is coupled to a motor current detection circuit 26 which detects a motor current on the basis of the difference in the electric potentials between the both ends of a shunt resistance Rs interposed into an H bridge circuit described below, is also coupled to the motor terminal voltage detection circuit 27 which detects a motor terminal voltage of the electric motor 13, and is further coupled to a temperature detection circuit 28 which detects a temperature near the arithmetical processing unit 22. In addition, the arithmetical processing unit 22 is coupled to a non-volatile memory 29 which is constituted in, for example, an EEPROM for storing a checking result detected in a self-checking processing described below, and is further coupled to an alarm circuit 32 which issues an alarm of alarming sound or alarming display in a case where the checking result includes abnormality making it impossible to execute a steering assisting control.

Furthermore the arithmetical processing unit 22 has a main MCU (Micro Controller Unit) 101 and a sub MCU 102. The main MCU 101 has therein a watch-dog timer (WDT) 101m for self-monitoring to monitor mutually and a watch-dog timer (WDT) 101s for sub MCU. The sub MCU 102 also has therein a watch-dog timer (WDT) 102s for self-monitoring to monitor mutually and a watch-dog timer (WDT) 102m for main MCU. Thus when time of a watch-dog timer 102m for the main MCU is up, the sub MCU 102 determines that the main MCU 101 is abnormal due to an over flow of the program, or the like, outputs motor drive prohibition signal Mp to an FET drive circuit 31 described below to stop driving the electric motor 13, and outputs a relay control signal Cp to turn the power supply relay 34 as a power interruption means off state.

Both of the main MCU 101 and the sub MCU 102 generate a motor driving signal Imr on the basis of torque detection values Tm and Ts, vehicle detection value Vs, motor current detection value Im, and motor terminal voltage Vm. However, only the motor driving signal Imr from the main MCU 101 is input to the FET drive circuit 31 described below and the motor driving signal Imr calculated by the sub MCU 102 is used for monitoring. Therefore, the sub MCU 102 compares the motor driving signal Imr calculated by the sub MCU 102 with the motor driving signal Imr calculated by the main MCU 101, and determines that if the deviation of both is within a predetermined range, the main CPU 101 is normal. However the sub MCU 102 determines that if the deviation is out of the predetermined range, the main CPU 101 is abnormal, and outputs motor drive prohibition signal Mp to the FET drive circuit 31 and outputs off signal to the power supply relay 34.

Here, the main MCU 101, as shown in FIG. 3, has therein at least, a ROM (Read On Memory) 130 storing a steering assisting control processing program executed in both MCUs, a self-checking processing program, or the like, and a RAM (Random Access Memory) 131 storing detection data of the torque detection values Tm and Ts, vehicle detection value Vs, motor current detection value Imd, and motor terminal voltage detection value Vmd, or the like, and data or processing result to be needed in processing of the steering assisting control processing and self-checking processing executed in MCU. In addition, the sub MCU 102 has therein at least, a ROM 130 storing a steering assisting control processing program, or the like, and a RAM 131 storing data or processing result to be needed in processing of the steering assisting control processing, or the like executed in MCU.

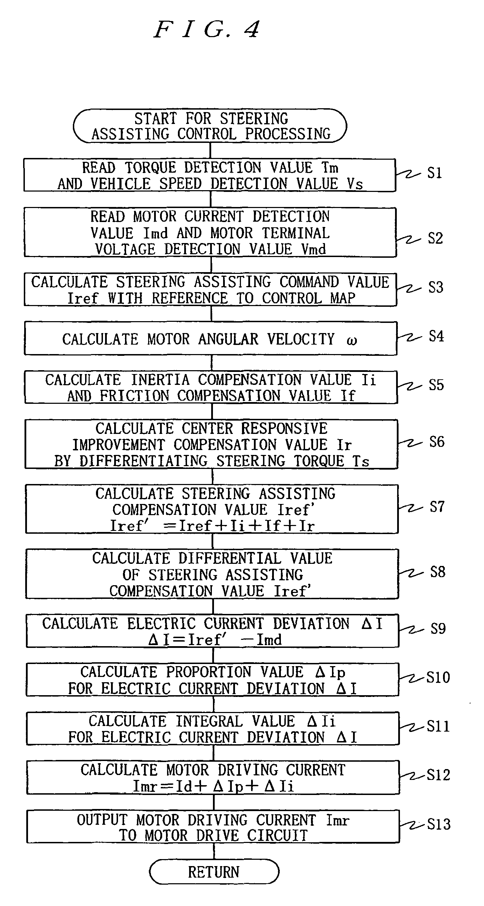

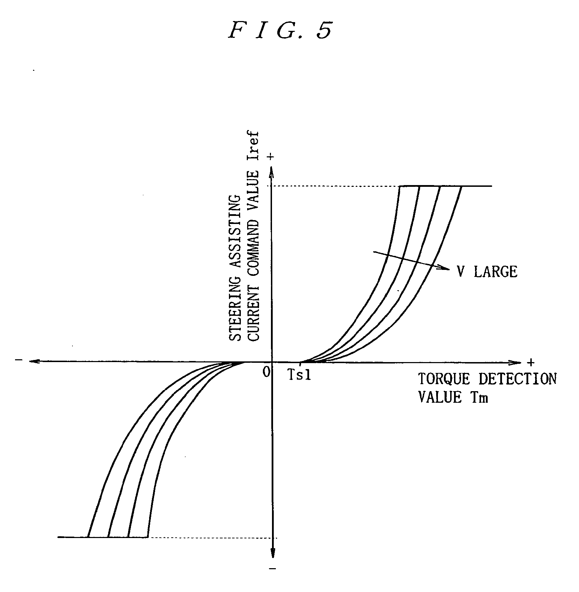

In addition, in the steering assisting control processing executed in the main MCU 101 and the sub MCU 102, as shown in FIG.4, at first in step S1, torque detection value Tm detected in the main torque sensor 3m from the steering torque detection circuit 21, and vehicle speed detection value Vs detected in the vehicle speed sensor 17 are read, then the process proceeds to step S2, the motor current detection value Imd and the motor terminal voltage detection value Vmd are read, and then the process proceeds to step S3, steering assisting command value Iref to become a motor current command value is calculated with referring to the steering assisting command value calculation map shown in FIG.5 on the basis of torque detection value Tm and vehicle detection value Vs.

Here, as shown in FIG.5, the steering assisting command value calculation map consists of torque detection value Tm taken in the horizontal axis, steering assisting torque command value Iref taken in the vertical axis, and characteristic diagram represented by a parabolic curve with making vehicle speed detection value Vs as a parameter. The steering assisting torque command value Iref maintains "0" between the torque detection vale Tm "0" and set value Ts1 near "0", and is set so that, when the torque detection value Tm exceeds set value Ts1, at first the steering assisting command value Iref increases comparatively-gently with respect to an increment of torque detection value Tm, but when torque detection value Tm further increases, steering assisting torque command value Iref increases steeply with respect to its increment. The inclination of this characteristic curve is set to become small in accordance with the increment of the vehicle speed.

Subsequently, the process proceeds to step S4, and an operation of following expression (1) is performed, on the basis of motor current detection value Imd and the motor terminal voltage detection value Vmd, to calculate motor angular velocity $\omega$.

$$\omega = (Vmd - Imd \cdot Rm) \ / \ K_0 \ \ldots\ldots \ (1)$$

Here, Rm denotes a motor windings resistance, and $K_0$ denotes an electromotive force constant of a motor. Subsequently, the process proceeds to step S5, and motor angular velocity $\omega$ is multiplied by inertia gain Ki, and a torque which accelerates or decelerates a motor inertia is removed from the steering torque Tm to calculate inertia compensation value Ii (= Ki $\cdot$ $\omega$) for inertia compensation control to get steering sense having no inertia feeling, and friction coefficient gain Kf is multiplied by absolute value of steering assisting command value Tref, to calculate friction compensation value If (Kf $\cdot$ Iref) for friction compensation control to eliminate effecting to steering force by friction for power transmission or electric motor. Here, a code of friction compensation value If is determined by a code of the torque detection value Tm and by steering direction signals for determining operation-increase/operation-returning of steering by this torque detection value Tm.

Subsequently, the process proceeds to step S6, and torque detection value Tm is processed by differential operation to calculate center responsive improvement command value Ir that secures stability in an assist characteristic dead band and compensates for static friction. And the process proceeds to step S7, and the calculated inertia compensation value Ii, friction compensation value If and center responsive improvement command value Ir are added to steering assistance command value Iref to calculate steering assistance compensation value Iref' (= Iref+Ii+If+Ir). Subsequently the process proceeds to step S8, and steering assisting compensation value Iref' is differentiated to calculate differential value Id for feed forward control.

Subsequently, the process proceeds to step S9, and motor current detection value Imd is subtracted from steering assisting compensation value Iref' to calculate electric current deviation $\Delta$I. Subsequently the process proceeds to step S10, and electric current deviation $\Delta$I is processed by proportion operation to calculate proportion value $\Delta$Ip for proportion compensation control. Subsequently the process proceeds to step S11, and electric current deviation $\Delta$I is processed by integral operation to calculate integral value $\Delta$Ii for integral compensation control, subsequently the process proceeds to step S12, and differential value Id, proportion value $\Delta$Ip and integral value $\Delta$Ii are added to calculate motor driving current Imr (=Id+$\Delta$Ip+$\Delta$Ii), and the process proceeds to step S13.

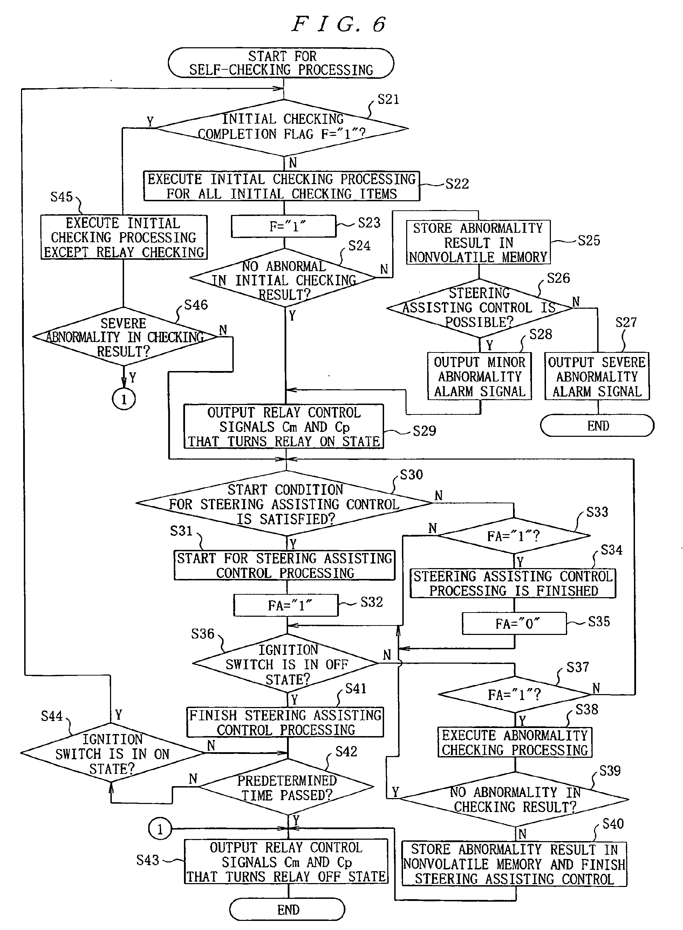

In this step S13, motor driving current Imr calculated in step S12 and rotating direction signal Dm that corresponds to a code of plus or minus of this motor driving current Imr are output to the FET drive circuit 31 controlling field effect transistors FET1 to FET4 constituting an H bridge circuit 30 driving the electric motor 13.
The H bridge circuit 30 has a serial circuit in which two field effect transistors FET1 and FET2 are serially-connected, and a serial circuit in which two field effect transistors FET3 and FET4 are serially-connected in parallel with a former serial circuit. The electric motor 13 is connected via a motor relay 33 between a connection point of field effect transistors FET1 and FET2 and a connection point of field effect transistors FET3 and FET4, and one of connection points of both serial circuits is connected via the power supply relay 34 to the battery 15 and the other is grounded via shunt resistor Rs.
The FET drive circuit 31 performs pulse width modulation on the basis of the motor driving current Imr, when motor driving current Imr and rotating direction signal Dm are input from the main MCU 101, to form pulse width modulation pulse PWM of a duty ratio that corresponds to motor driving current Imr, and determines which group is selected, on the basis of rotating direction signal Dm, from between a group of field effect transistors FET1 and FET4 and a group of field effect transistors FET2 and FET3, on a diagonal of the H bridge circuit 30, and supplies on status signal for controlling one selected group of field effect transistors, for example, FET1 or FET3 to on state, and supplies a pulse width modulation signal PWM to the other group of field effect transistors FET2 and FET4.
In addition, in the main MCU 101, self-checking processing shown in FIG. 6 is executed.
This self-checking processing is started for execution when a power is supplied from the power supply circuit 23 into the arithmetical processing unit 22 with the ignition switch 16 turned on state. At first, in step S21, it is determined whether or not initial checking completion flag F, which represents whether or not an execution of an initial checking is completed, is set to "1" that represents initial checking completion. When initial checking completion flag F is reset to "0", the process proceeds to step S22, and all of initial checking items set beforehand are executed. Here, initial checking items are set as follows: torque sensor checking processing that operates absolute value $|\Delta T|$ of deviation T of torque detection values Tm and Ts to determine whether or not this absolute value $|\Delta T|$ is a predetermined value $\Delta Ts$ or more, and determine that torque sensor is abnormal when $|\Delta T| \geqq \Delta Ts$ and determines that torque sensor is abnormal when voltage abnormality detection signal SA is logic value "1"; power supply checking processing that detects abnormality of power supply voltage of the power supply circuit 23, battery voltage of the battery 15, and battery voltage input via the ignition switch 16; controller checking processing that detects abnormality of the main MCU 101 by the sub MCU 102; nonvolatile memory checking processing that detects abnormality of the nonvolatile memory 29 connected to the main MCU 101; temperature detection checking processing that detects abnormality of the temperature around the arithmetical processing unit 22 on the basis of temperature detection value of the temperature detection circuit 28; motor terminal voltage checking processing that detects abnormality of motor terminal voltage detected in the motor terminal voltage detection circuit 27; motor current checking processing that detects abnormality of motor current detection value Imd detected in motor current detection circuit 26; checking processing of the main MCU 101; overcurrent checking processing that detects overcurrent abnormality due to abnormality such as a earth fault, powering fault and short circuit of the H bridge circuit 30 and the FET drive circuit 31; motor checking processing that detects abnormality of the electric motor 13; relay checking processing that detects abnormality of the motor relay 33 and the power supply relay 34; and CAN checking processing that detects abnormality of CAN communication.
Here, relay checking processing controls relay control signals Cm and Cp for the motor relay 33 and the power supply relay 34 to on state and off state, and read respectively output voltages when the motor relay 33 and the power supply relay 34 are made to be bias state and non bias state, to check a welding state of the relay connection point.
When this initial checking processing is completed, the process proceeds to step S23, and initial checking completion flag F is set to "1", subsequently the process proceeds to step S24, and it is determined whether or not there is no abnormality in an initial checking result, and when there is no abnormality in the initial checking result, the process proceeds to step S29, and when there is any abnormality in the initial checking result, the process proceeds to step S25, and the checking result that abnormality occurred is stored in the nonvolatile memory 29.
And then the process proceeds to step S26, and it is determined whether or not steering assisting control is possible from the checking result that abnormality occurred, and when steering assisting control is impossible, the process proceeds to step S27, and a severe alarm signal representing an event that steering assisting control is impossible is output to an alarm circuit 32, and then self-checking processing is finished, and when steering assisting control is possible, the process proceeds to step S28, and a minor alarm signal representing an event of minor abnormality is output to the alarm circuit 32, and then the process proceeds to step S29.
In step S29, relay control signals Cm and Cp, which turn the motor relay 33 and the power supply relay 34 on state, are output to make steering assisting control waiting state, subsequently the process proceeds to step S30, and it is determined whether or not a predetermined steering assisting start condition is satisfied. As this steering assisting start condition, it is determined whether or not the number of rotations (RPM) of engine became a predetermined value (for example, 470rpm) set beforehand, or more, and when the steering assistance start condition is satisfied, the process proceeds to step S31, and steering assisting control processing previously described in FIG.4 is started, and then the process proceeds to step S32, and steering assisting control in-processing flag FA representing that steering assisting control processing is being executed, to set "1" representing that steering assisting control processing is being processed, and then the process proceeds to step S36.

On the other hand, in the determination result of step S30, when steering assisting control start condition is not satisfied, the process proceeds to step S33, and it is determined whether or not steering assisting control in-processing flag FA is set to "1", and when steering assisting control in-processing flag FA is reset to "0", the process proceeds to step S36 directly, and when steering assisting control in-processing flag FA is set to "1", the process proceeds to step S34, and steering assisting control processing is finished, subsequently the process proceeds to step S35, and steering assisting control in-processing flag FA is reset to "0", and then the process proceeds to step S36.

In step S36, it is determined whether or not the ignition switch 16 is turned to off state, and when the ignition switch 16 continues on state, the process proceeds to step S37, and it is determined whether or not steering assisting control in-processing flag FA is set to "1", and when steering assisting control in-processing flag FA is reset to "0", the process proceeds is turned back to step S30, and when steering assisting control in-processing flag FA is reset to "1", the process proceeds to step S38, and an abnormality checking processing in a normal state is executed, and then the process proceeds to step S39. The abnormality checking processing in this normal state executes torque sensor checking processing, power supply checking processing, controller abnormality processing, motor terminal voltage checking processing, motor current checking processing, overcurrent checking processing and motor checking processing, among checking items of initial checking processing previously described.

In step S39, it is determined whether or not there is no abnormality in checking result in above step S38, and when there is no abnormally, the process proceeds is turned back to step S36, and when there is any abnormality, the process proceeds to step S40, and the abnormality result is stored in the nonvolatile memory 29, and steering assisting control processing of FIG. 4 is finished, and then the process proceeds to step S43 described below.

In addition, when the ignition switch 16 is turned to off state in the determination result in step S36, the process proceeds to step S41, so that steering assisting control processing of FIG. 4 is finished, and then the process proceeds to step S42, to determine whether or not a predetermined delay time (for example, 10 minutes) set beforehand has been passed since the ignition switch 16 is turned to off state. When the predetermined delay time has elapsed, the process proceeds to step S43, and relay control signals Cm and Cp which turn the motor relay 33 and the power supply relay 34 off state together are output, and then self-checking processing is finished, and when the predetermined delay time has not elapsed, the process proceeds to step S44.

In step S44, it is determined whether or not the ignition switch 16 is turned to on state again, and when the ignition switch 16 continues off state, the process is turned back to step S42, and when the ignition switch 16 is returned on state again, the process is turned back to step S21.

On the other hand, when initial checking completion flag F is set to "1" in determination result of step S20, the process proceeds to step S45, so as to execute initial checking processing for remaining checking items except relay checking processing and controller checking processing executed in step S21, subsequently the process proceeds to step S46, and checking result determination processing similar with steps S24 to step S28 previously described, and when there is no abnormality in checking result, or in a case even if there is any abnormality, it is a minor abnormality, the process proceeds to step S30, and turns steering assisting control waiting state, and when abnormality to affect steering assisting control occurred, the abnormality is stored in the nonvolatile memory 29, and an alarm signal is output to the alarm circuit 32, and then the process proceeds to step S43.

This processing of FIG.4 corresponds to steering assisting control means, and the processing of FIG.6 corresponds to self-checking means.

Next, the operations of the above embodiment is explained.

Now, in a situation that the ignition switch 16 is turned to off state in a vehicle and the power supply relay 34 is turned to off state so that a power from the battery 15 is not supplied to the power supply circuit 23, the main MCU 101 and the sub 102 in the arithmetical processing unit 22 are in operation stopping state.

The steering assisting control processing of FIG.4 and the self-checking processing of FIG.6 are not executed in the main MCU 101, and the motor relay 33 and the power supply relay 34 are turned to off state so that power supply from the battery 15 to the H bridge circuit 30 is interrupted, and supply of a motor current to the electric motor 13 is also stopped.

From this situation, when a driver gets on a vehicle and turns the ignition switch 16 on state, a power from the battery 15 is supplied to the power supply circuit 23, whereby control power is supplied from this power supply circuit 23 to the main MCU 101 and the sub MCU 102 in the arithmetical processing unit 22, and control power is also supplied to the FET drive circuit 31.

For this reason, initialization processing is executed by the main MCU 101 in the arithmetical processing unit 22 so that initial checking completion flag F is reset to "0" and various set values necessary for operation processing are set.

When this initialization processing is finished, self-checking of FIG. 6 is started for execution. Because initial checking completion flag F is reset to "0", the process proceeds from step S21 to step S22, and initial checking processing performing checking of all initial checking items, including torque sensor checking processing, power supply checking processing, controller checking processing, temperature detection checking processing, motor terminal voltage checking processing, motor current checking processing, checking processing of main MCU, overcurrent checking processing, motor checking processing, relay checking processing and CAM checking processing previously described, is executed.

Then, after this initial checking processing is finished, the process proceeds to step S24, and initial checking completion flag F is set to "1". Subsequently the process proceeds to step S24, and it is determined whether or not there is no abnormality in initial checking result. Here, when there is any abnormality in an initial checking result, the checking result that abnormality occurred is stored in the nonvolatile memory 29 except abnormality of the nonvolatile memory 29 (step S25), subsequently it is determined whether or not steering assisting control is possible, and in a case torque sensor abnormality, power supply abnormality, motor terminal voltage abnormality, motor current abnormality, abnormality of the main MCU 101, overcurrent abnormality, motor abnormality, relay abnormality are detected, normal steering assisting control cannot be performed, accordingly it is determined that steering assisting control is impossible and the process proceeds to step S27, and an abnormality alarm signal representing that steering assisting control is impossible, is output to the alarm circuit 32, and after alarming an effect that steering assisting control is impossible to a driver, and self-checking processing is finished. In this case, steering assisting control processing of FIG. 4 is not started, and the motor relay 33 and the power supply relay 34 maintain off state. Therefore, the electric motor 13 maintains stop state without being driven and the steering wheel 1 is steered only by a steering force of the driver.

In addition, in a case there is a minor abnormality such as abnormality of the nonvolatile memory 29, abnormality of the temperature detection circuit 28, and abnormality of CAN communication in initial checking result, a minor abnormality signal representing an effect that it is minor abnormality is output to the alarm circuit 32, and then the process proceeds to step S29.

On the other hand, when there is no abnormality in initial checking result in step S24, the process proceeds to step S29 directly.

In step S30, it is determined whether or not steering assisting control start condition set beforehand is satisfied, and when steering assisting control start condition is not satisfied, the process proceeds to step S33, and it is determined whether or not steering assisting control in-processing flag FA is "1", Since the steering assisting control is not started and steering assisting control in-processing flag FA is reset to "0", the process proceeds step S36 directly, and it is determined whether or not the ignition switch 16 is turned to off state. In a case the ignition switch 16 continues on state, the process proceeds to step S37, and because steering assisting control in-processing flag FA is reset to "0", the process is turned back to step S30, and steering assisting control waiting state is continued.

Afterwards, when a steering assisting control start condition is satisfied, the process proceeds from step S30 to step S31, and steering assisting control processing of FIG.4 is started. Subsequently, the process proceeds to step S32, and steering assisting control in-processing flag FA is set to "1", and then the process proceeds to step S36, and it is determined whether or not the ignition switch 16 is turned to off state.

Thus, if steering assisting control processing of FIG.4 is started, torque detection value Tm detected at main torque sensor 3m of the steering torque sensor 3 and vehicle speed detection value Vs detected in the vehicle speed sensor 17 are read (step S1), subsequently motor current detection value Imd and motor terminals voltage detection value Vmd are read (step S2), and steering assistance command value Iref is calculated with reference to steering assisting command value calculation map shown in FIG. 5, on the basis of torque detection value Tm and vehicle speed detection value Vs (step S3).

On the other hand, previously described expression (1) is operated on the basis of motor current detection value Imd and motor terminal voltage detection value Vmd, to calculate motor angular velocity $\omega$(step S4), and simultaneously inertia compensation value Ii for inertia compensation control is calculated on the basis of this motor angular velocity $\omega$, friction compensation value If for friction compensation control is calculated (step S5). In addition steering torque Tm is processed by differential operation to calculate center responsive improvement command value Ir (step S6). Then, these inertia compensation value Ii, friction compensation value If and center responsive improvement compensation value Ir are added to steering assisting command value Iref to calculate steering assisting compensation value Iref' (step S7).

Then, steering assisting compensation value Iref' is processed by differential operation to calculate differential value Id for differential compensation control in feed forward control (step S8). Subsequently, motor current detection value Imd is subtracted from steering assisting compensation value Iref' to calculate electric current deviation $\Delta I$ (step S9), Such calculated electric current deviation $\Delta I$ is processed by proportion operation to calculate proportion value $\Delta Ip$ for proportion compensation control and simultaneously, is processed by integral operation to calculate integral value $\Delta Ii$ for integral compensation control (steps S10 and S11). Subsequently differential value Id, proportion value $\Delta Ip$ and integral value $\Delta Ii$ are added to calculate motor driving signal Imr (step S12).

Then, calculated motor driving signal Imr is output to the FET drive circuit 31, so that control signal in on state and pulse width modulated pulse PWM are supplied to field effect transistors FET1 and FET4 or FET3 and FET2 on a diagonal of an H bridge 30 from the FET drive circuit 31, whereby a drive current is supplied to the electric motor 13 to generate steering assisting force corresponding to steering torque acted to the steering wheel 1, and to transmit this force via the reduction gear to the output shaft 2b.

Then, in the so-called stationary steering situation that steers the steering wheel 1 with a vehicle stopping, because an inclination of a characteristic line of steering assisting command value calculation map shown in FIG. 5 is large, large steering assisting command value Iref is calculated with small torque detection value Tm. Therefore, large steering assisting force is generated with the electric motor 13, thereby allowing light steering.

On the other hand, when a vehicle takes off to move faster than a predetermined vehicle speed, an inclination of a characteristic line of a steering assisting command value calculation map shown in FIG.5 becomes small. Therefore, with an even large torque detection value Tm, small steering assisting command value Iref is calculated. Therefore steering assisting force generated at the electric motor 13 becomes small enough to suppress lightening too much in steering of the steering wheel 1, thereby allowing to perform most suitable steering.

Even in this steering assisting control state, normal abnormality checking processing is performed in step S38 in self-checking processing of FIG.6. In a case there is any abnormality in an abnormality checking result, the abnormality result is stored in the nonvolatile memory 29, and addition, steering assisting control processing is finished, and relay control signals Cm and Cp that turn the motor relay 33 and the power supply relay 34 off state at the same time are output to stop driving the electric motor 13, whereby power supply to the power supply circuit 23 and the arithmetical processing unit 22 is interrupted.

Afterwards, when a driver stops a vehicle and turns the ignition switch 16 off state, the process proceeds from step S36 to step S41 in self-checking processing of FIG.6, and steering assisting control processing of FIG.4 is finished. Subsequently the process proceeds to step S42, and it is determined whether or not predetermined delay time passed. When the predetermined delay time has not passed, the process proceeds to step S44, and it is determined whether or not the ignition switch 16 is turned to on state again. When the predetermined delay time has passed with the ignition switch 16 being in off state, the process proceeds to step S43, and relay control signals Cm and Cp that turn the motor relay 33 and the power supply relay 34 off state are output to turn the motor relay 33 and the power supply relay 34 off state, whereby power supply from the battery 15 to the power supply circuit 23 is interrupted so that power supply to the arithmetical processing unit 22, the H bridge circuit 30, the FET drive circuit 31 and the electric motor 13 is interrupted.

However, when the ignition switch 16 is turned to on state again, before the elapse of the predetermined delay time since the ignition switch 16 is turned to off state, the process is turned back from step S44 to step S20. Because initial checking completion flag F is set to "1", the process proceeds to step S23. Initial checking processing of checking items, except relay checking processing and checking processing to prohibit steering assistance with the power supply relay 34 turned off state by the sub MCU 102, among initial checking items, is executed, and then the process proceeds to step S24.

For this reason, initial checking is performed again for checking items necessary to determine whether or not steering assisting control processing can be started except relay checking processing. When checking result is normal, or even if it is abnormal, steering assisting control is in possible state, the process proceeds to step S30, and it is determined whether or not steering assisting control start condition is satisfied, and when steering assisting control start condition is satisfied, the process proceeds to step S30, and steering assisting control processing is started to be returned in a steering assisting control state.

Then, when the ignition switch 16 is turned to on state again, relay checking processing is removed in initial checking processing to be executed in step S23. Accordingly, a sonic boom to become an impact noise by turning the motor relay 33 and the power supply relay 34 to on or off individually by relay checking processing, can be prevented surely from occurring multiple times, and can be prevented from giving uncomfortable feeling to a driver to improve its merchantability, and can remove relay checking processing that takes much time to shorten an initial checking time. Besides, because checking processing is performed for checking items except relay checking processing, necessary initial checking can be performed while shortening an initial checking time.

In initial checking processing when the ignition switch 16 is turned to on state again before the elapse of the predetermined delay time since this ignition switch 16 is turned to off state, because originally the motor relay 33 and the power supply relay 34 maintain on state. In a case relay checking processing result in first initial checking processing is normal, there is no failure to resume steering assisting control processing due to abnormality occurring in the motor relay 33 and the power supply relay 34, therefore, even if relay checking processing is removed, there is no problem.

It should be noted that the above embodiment is described in the case where the ignition switch 16 is turned to on state again before the elapse of the predetermined delay time since the ignition switch 16 is turned to off state and it is determined whether or not initial checking processing is completed to determine whether or not relay checking processing is to be executed. However, the present mention is not limited to this, checking items can be determined when the ignition switch 16 is turned to on state again on the basis of checking result executed in a period until the ignition switch 16 is turned to off state since the ignition switch 16 is turned to on state.

In other words, for example, in steering assisting control permission state that steering assisting control is possible by starting steering assisting control processing of FIG.4, when a minor abnormality such as abnormality of the temperature detection circuit 28 or abnormality of the nonvolatile memory 29 is detected, abnormality detection flags FT and FM representing abnormality of the temperature detection circuit 28 and abnormality of the nonvolatile memory 29 at that time are set to "1" to be stored in a predetermined storage area of RAM or an external memory. When the ignition switch 16 is turned to on state again, the presence or absence of abnormality detection flags FT and FM is confirmed with reference to the predetermined storage area of a RAM or an external memory in initial checking processing of step S23, so that initial checking may be performed only for checking items in which abnormality detection flag is stored.

In addition, the above embodiment is described for a case that motor driving current Imr is calculated with software processing to perform in the arithmetical processing unit 22, but the present invention is not limited to this. The motor driving current Imr may be calculated with hardware in which a steering assisting command value operation unit, a center responsive improvement circuit, an inertia compensator, a friction compensator, a differential compensator, a subtractor, a proportion operation unit, an integral operation unit, an adder, and the like may be combined together.

More particularly, the above embodiment is described for a case that an EEPROM is applied as the nonvolatile memory 29, but the present mention is not limited to this. Arbitrary nonvolatile memory such as a flash memory can be applied.

Furthermore the above embodiment is described for a case that the arithmetical processing unit 22 is constituted of two of the main MCU 101 and the sub MCU 102, but the present mention is not limited to this, operation processing may be performed by one MCU or an arithmetical processing unit corresponding to MCU.

Industrial Applicability

According to the electric power steering apparatus of the present invention, initial checking is performed in self-checking means for every operation start of steering assisting control means, but checking items in performing this initial checking are determined on the basis of checking result in a period until the ignition switch is turned to off state since operating steering assisting control means operates at a previous time. Therefore, only necessary initial checking may be performed to shorten initial checking time.

In addition, when the ignition switch is turned to on state again before the elapse of the predetermined delay time to maintain steering assisting control means in operation state, since the ignition switch is turned to off state, initial checking for checking items except checking items which accompanies conduction/interruption operation of a power interruption means such as a relay. Therefore, when the ignition switch is turned to off state again before the elapse of the predetermined delay time since the ignition switch is turned to off state, a checking of the power interruption means may be omitted, thereby allowing a sonic boom to be prevent surely at the time of conduction/interruption operations from occurring and allowing the improvement in its merchantability.

**Claims**

1. An electric power steering apparatus comprising: a steering assisting mechanism (10) that is provided with an electric motor (13) to give a steering assisting force to a steering system; a steering assisting control means that controls driving the electric motor (13) of the steering assisting mechanism (10); and a self-checking means that performs an initial checking including a checking of a power interruption means (34) of the steering assisting control means at least when an ignition switch (16) is turned to on state, and that causes the steering assisting control means to operate when there is no trouble in operation of the steering assisting control means in a result of the initial checking, **characterised in that**
   the self-checking means is configured to determine checking items to be executed in the next initial checking on the basis of a checking result in a period until the ignition switch (16) is turned to off state since the steering assisting control means (14) operates.

2. The electric power steering apparatus according to claim 1, wherein the self-checking means is configured to execute the initial checking when the ignition switch (16) is turned to on state, and perform the initial checking for checking items except the checking items accompanying with conduction/interruption operations of the power interruption means (34) when the ignition switch (16) is turned to on state again before the elapse of the predetermined delay time to maintain the steering assisting control means in operation state since the ignition switch (16) is turned to off state.

3. The electric power steering apparatus according to claim 1 or 2, wherein the power interruption means (34) is controlled in operation by a control means comprising a power supply system from a power supply source (15) and a power supply system from the ignition switch (16).

4. The electric power steering apparatus according to any one of claims 1 to 3, further comprising a control unit (14) including the steering assisting control means, wherein the control unit (14) comprises an arithmetical processing unit (22) that operates a current command value on the basis of a steering torque input from the steering torque detection means (3); a motor control unit that drives the electric motor (13) on the basis of the current command value operated in the arithmetical processing unit (22); the power interruption means (34) that is interposed between (34) the motor control unit and power supply source (15); and a motor relay (33) that is interposed between the motor control means and the electric motor (13), and a power circuit that is connected between the power interruption means (34) and motor control unit while being connected to the power supply source (15) via the ignition switch (16) for supplying the operation power to the arithmetical processing unit (22).

**Patentansprüche**

1. Elektrische Servolenkungsvorrichtung, umfassend: einen Lenk-Unterstützungsmechanismus (10), der mit einem Elektromotor (13) versehen ist, um eine Lenk-Unterstützungskraft auf ein Lenksystem zu geben; eine Lenk-Unterstüizungssteuereinrichtung, welche Antrieb des Elektromotors (13) des Lenk-Unterstützungsmechanismus (10) steuert; und eine Selbstprüfungs- Einrichtung, welche eine Anfangsprüfung einschließlich einer Prüfung einer Leistungs-Unterbrechungseinrichtung (34) der Lenk-Unterstützungssteuereinrichtung zumindest dann ausführt, wenn ein Zündschalter (16) in den EIN-Zustand gebracht ist, und welches bewirkt, dass die Lenk-Unterstützungssteuereinrichtung arbeitet, wenn kein Problem im Betrieb der Lenk-Unterstützungssteuereinrichtung in einem Ergebnis der Anfangsprüfung vorliegt, **dadurch gekennzeichnet, dass** die Selbstprüfungs-Einrichtung dahingehend aufgebaut ist, in der nächsten Anfangsprüfung auszuführende Prüfobjekte zu bestimmen, auf der Basis eines Prüfungsergebnisses in einem Zeitabschnitt bis der Zündschalter (16) in den AUS-Zustand gebracht ist, seitdem die Lenk-Unterstützungssteuereinrichtung (14) arbeitet.

2. Elektrische Servolenkungsvorrichtung nach Anspruch 1, wobei die Selbstprüfungs-Einrichtung dahingehend aufgebaut ist, die Anfangsprüfung auszuführen, wenn der Zündschalter (16) in den EIN-Zustand gebracht ist, und die Anfangsprüfung auszuführen für Prüfobjekte mit Ausnahme der Prüfobjekte, die mit Fortführungs-/Unterbrechungs-Vorgängen der Leistungs-Unterbrechungseinrichtung (34) begleitet sind, wenn der Zündschalter (16) wieder in den EIN-Zustand gebracht wird, bevor die vorbestimmte Verzögerungszeit abgelaufen ist, um die Lenk-Unterstützungssteuereinrichtung im Betriebszustand zu halten seit der Zündschalter (16) in den AUS-Zustand gebracht ist.

3. Elektrische Servolenkungsvorrichtung nach Anspruch 1 oder 2, wobei die Leistungs-Unterbrechungseinrichtung (34) im Betrieb durch eine Steuereinrichtung gesteuert wird, welche ein Leistungs-Zufuhrsystem von einer Leistungs-Zufuhrquelle (15) und ein Leistungs-Zufuhrsystem von dem Zündschalter (16) umfasst

4. Elektrische Servolenkungsvorrichtung nach irgendeinem der Ansprüche 1 bis 3, ferner umfassend eine Steuereinheit (14), welche die Lenk-Unterstützungssteuereinrichtung enthält, wobei die Steuereinheit (14) eine Arithmetik-Verarbeitungseinheit (22), welche einen gegenwärtigen Befehlswert auf der Basis eines Lenk-Drehmomenteingangs von der Lenk-Drehmoment-Erfassungseinrichtung (3) betreibt; eine Motorsteuereinheit, welche den Elektromotor (13) auf der Grundlage des gegenwärtigen Befehlswertes antreibt, der in der Arithmetik-Verarbeitungseinheit (22) betätigt wird; die Leistungs-Unterbrechungseinrichtung (34), welche zwischen der Motorsteuereinheit und einer Leistungszufuhrquelle (15) zwischenliegend angeordnet ist; und ein Motorrelais (33), das zwischen der Motorsteuereinrichtung und dem Elektromotor (13) zwischenliegend angeordnet ist und einen Leistungsschaltkreis der zwischen der Leistungs-Unterbrechungseinrichtung (34) und Motorsteuereinheit angeschlossen ist, während dieser an der Leistungszufuhrquelle (15) über den Zündschalter (16) angeschlossen ist, zur Zufuhr der Betriebsleistung zu der Arithmetik-Verarbeitungseinheit (22) umfasst

**Revendications**

1. Dispositif de direction assistée électrique comprenant : un mécanisme d'assistance de direction (10) qui est pourvu d'un moteur électrique (13) pour fournir une force d'assistance de direction à un système de direction ; un moyen de commande d'assistance de direction qui contrôle l'entraînement du moteur électrique (13) du mécanisme d'assistance de direction (10) ; et un moyen d'autocontrôle qui effectue un contrôle initial comprenant un contrôle d'un moyen de coupure d'alimentation (34) du moyen de commande d'assistance de direction au moins quand un commutateur d'allumage (16) est réglé sur l'état de marche, et qui amène le moyen de commande d'assistance de direction à fonctionner quand il n'existe aucun défaut dans le fonctionnement du moyen de commande d'assistance de direction en conséquence du contrôle initial, **caractérisé en ce que** le moyen d'autocontrôle est configuré pour déterminer des éléments de contrôle à exécuter dans le contrôle initial suivant sur la base d'un résultat de contrôle dans une période jusqu'à ce que le commutateur d'allumage (16) soit réglé sur l'état d'arrêt depuis que le moyen de commande d'assistance de direction (14) fonctionne

2. Dispositif de direction assistée électrique selon la revendication 1, dans lequel le moyen d'autocontrôle est configuré pour exécuter le contrôle initial quand le commutateur d'allumage (16) est réglé sur l'état de marche et effectuer le contrôle initial pour contrôler des éléments à l'exception des éléments de contrôle associés à des opérations de conduction/interruption du moyen de coupure d'alimentation (34) quand le commutateur d'allumage (16) est à nouveau réglé sur l'état de marche avant l'expiration du temps de retard prédéterminé pour maintenir le moyen de commande d'assistance de direction dans l'état de fonctionnement jusqu'à ce que le commutateur d'allumage (16) soit réglé sur l'état d'arrêt

3. Dispositif de direction assistée électrique selon la revendication 1 ou 2, dans lequel le moyen de coupure d'alimentation (34) est commandé en fonctionnement par un moyen de commande comprenant un système d'alimentation électrique à partir d'une source d'alimentation électrique (15) et d'un système d'alimentation électrique à partir du commutateur d'allumage (16).

4. Dispositif de direction assistée électrique selon l'une quelconque des revendications 1 à 3, comprenant en outre une unité de commande (14) comprenant le moyen de commande d'assistance de direction, dans lequel l'unité de commande (14) comprend une unité de traitement arithmétique (22) qui exploite une valeur de commande actuelle sur la base d'une entrée de couple de direction provenant des moyens de détection de couple de direction (3) ; une unité de commande de moteur qui entraîne le moteur électrique (13) sur la base de la valeur de commande actuelle exploitée dans l'unité de traitement arithmétique (22) ; le moyen de coupure d'alimentation (34) qui est interposé entre l'unité de commande de moteur et une source d'alimentation électrique (15) ; et un relais de moteur (33) qui est interposé entre le moyen de commande de moteur et le moteur électrique (13), et un circuit d'alimentation qui est connecté entre le moyen de coupure d'alimentation (34) et l'unité de commande de moteur tout en étant connecté à la source d'alimentation électrique (15) via le commutateur d'allumage (16) pour délivrer l'alimentation de fonctionnement à l'unité de traitement arithmétique (22)

*F I G. 1*

REDUCTION GEAR

ELECTRIC MOTOR

VEHICLE SPEED SENSOR

CONTROL UNIT

*F I G. 2*

TORQUE SENSOR OUTPUT VOLTAGE

$V_0$

LEFT STEERING

RIGHT STEERING

STEERING TORQUE

# FIG. 3

## *F I G. 4*

```
        ┌─────────────────────────────┐
        │      START FOR STEERING      │
        │ ASSISTING CONTROL PROCESSING │
        └─────────────────────────────┘
```

| READ TORQUE DETECTION VALUE Tm AND VEHICLE SPEED DETECTION VALUE Vs | S1 |

| READ MOTOR CURRENT DETECTION VALUE Imd AND MOTOR TERMINAL VOLTAGE DETECTION VALUE Vmd | S2 |

| CALCULATE STEERING ASSISTING COMMAND VALUE Iref WITH REFERENCE TO CONTROL MAP | S3 |

| CALCULATE MOTOR ANGULAR VELOCITY $\omega$ | S4 |

| CALCULATE INERTIA COMPENSATION VALUE Ii AND FRICTION COMPENSATION VALUE If | S5 |

| CALCULATE CENTER RESPONSIVE IMPROVEMENT COMPENSATION VALUE Ir BY DIFFERENTIATING STEERING TORQUE Ts | S6 |

| CALCULATE STEERING ASSISTING COMPENSATION VALUE Iref' $Iref' = Iref + Ii + If + Ir$ | S7 |

| CALCULATE DIFFERENTIAL VALUE OF STEERING ASSISTING COMPENSATION VALUE Iref' | S8 |

| CALCULATE ELECTRIC CURRENT DEVIATION $\Delta I$ $\Delta I = Iref' - Imd$ | S9 |

| CALCULATE PROPORTION VALUE $\Delta Ip$ FOR ELECTRIC CURRENT DEVIATION $\Delta I$ | S10 |

| CALCULATE INTEGRAL VALUE $\Delta Ii$ FOR ELECTRIC CURRENT DEVIATION $\Delta I$ | S11 |

| CALCULATE MOTOR DRIVING CURRENT $Imr = Id + \Delta Ip + \Delta Ii$ | S12 |

| OUTPUT MOTOR DRIVING CURRENT Imr TO MOTOR DRIVE CIRCUIT | S13 |

```
            ┌──────────┐
            │  RETURN  │
            └──────────┘
```

# F I G. 5

*F I G. 6*

```
         ┌─────────────────────────┐
         │       START FOR         │
         │ SELF-CHECKING PROCESSING│
         └─────────────────────────┘
```

START FOR SELF-CHECKING PROCESSING

S21 — INITIAL CHECKING COMPLETION FLAG F="1"?

S22 — EXECUTE INITIAL CHECKING PROCESSING FOR ALL INITIAL CHECKING ITEMS

S45 — EXECUTE INITIAL CHECKING PROCESSING EXCEPT RELAY CHECKING

S23 — F="1"

S24 — NO ABNORMAL IN INITIAL CHECKING RESULT?

S25 — STORE ABNORMALITY RESULT IN NONVOLATILE MEMORY

S46 — SEVERE ABNORMALITY IN CHECKING RESULT?

S26 — STEERING ASSISTING CONTROL IS POSSIBLE?

S28 — OUTPUT MINOR ABNORMALITY ALARM SIGNAL

S27 — OUTPUT SEVERE ABNORMALITY ALARM SIGNAL

END

S29 — OUTPUT RELAY CONTROL SIGNALS Cm AND Cp THAT TURNS RELAY ON STATE

S30 — START CONDITION FOR STEERING ASSISTING CONTROL IS SATISFIED?

S31 — START FOR STEERING ASSISTING CONTROL PROCESSING

S33 — FA="1"?

S34 — STEERING ASSISTING CONTROL PROCESSING IS FINISHED

S35 — FA="0"

S32 — FA="1"

S36 — IGNITION SWITCH IS IN OFF STATE?

S37 — FA="1"?

S38 — EXECUTE ABNORMALITY CHECKING PROCESSING

S41 — FINISH STEERING ASSISTING CONTROL PROCESSING

S44 — IGNITION SWITCH IS IN ON STATE?

S42 — PREDETERMINED TIME PASSED?

S39 — NO ABNORMALITY IN CHECKING RESULT?

S40 — STORE ABNORMALITY RESULT IN NONVOLATILE MEMORY AND FINISH STEERING ASSISTING CONTROL

S43 — OUTPUT RELAY CONTROL SIGNALS Cm AND Cp THAT TURNS RELAY OFF STATE

END

17

**EP 2 161 179 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003182598 A